(19) Europäisches Patentamt
European Patent Office
Office européen des brevets

(11) EP 0 609 220 B1

(12) **EUROPEAN PATENT SPECIFICATION**

(45) Date of publication and mention
of the grant of the patent:
**22.01.1997 Bulletin 1997/04**

(51) Int Cl.$^6$: **C08L 23/04**, C09D 123/04,
C09J 123/04

(21) Application number: **92909905.9**

(22) Date of filing: **02.04.1992**

(86) International application number:
**PCT/US92/02578**

(87) International publication number:
**WO 92/17538 (15.10.1992 Gazette 1992/26)**

(54) **LOW TEMPERATURE, HIGH SPEED EXTRUSION COATING PROCESS AND POLYETHYLENE COMPOSITIONS USEFUL THEREFOR CONTAINING A THERMALLY SENSITIVE ADDITIVE**

VERFAHREN ZUR HOCHGESCHWINDIGKEITSEXTRUSIONSBESCHICHTUNG BEI NIEDRIGER TEMPERATUR UND DAFÜR GEIEIGNETE POLYÄTHYLENZUSAMMENSETZUNGEN MIT WÄRMEEMPFINDLICHEM ZUSATZMITTEL

PROCEDE DE REVETEMENT PAR EXTRUSION A HAUTE VITESSE ET BASSE TEMPERATURE, COMPOSITIONS DE POLYETHYLENE CONTENANT UN ADDITIF THERMOSENSIBLE ET UTILES POUR CE PROCEDE

(84) Designated Contracting States:
**AT BE CH DE DK ES FR GB GR IT LI LU MC NL SE**

(30) Priority: **05.04.1991 US 681801**

(43) Date of publication of application:
**10.08.1994 Bulletin 1994/32**

(73) Proprietor: **EASTMAN CHEMICAL COMPANY Kingsport, TN 37660 (US)**

(72) Inventors:
• **EDWARDS, Ray**
**Henderson, TX 75652 (US)**
• **MRUK, William, Andrew**
**Rochester, NY 14624 (US)**

(74) Representative: **Behrens, Dieter, Dr.-Ing. et al Wuesthoff & Wuesthoff Patent- und Rechtsanwälte Schweigerstrasse 2 81541 München (DE)**

(56) References cited:
EP-A- 0 052 889          EP-A- 0 136 874
EP-A- 0 373 300          EP-A- 0 407 309

## Description

This invention relates to extrusion coating processes. In one aspect, this invention relates to polyethylene compositions useful for extrusion coating. In another aspect, this invention relates to high speed extrusion coating, wherein the extruded material exhibits excellent adhesion to substrate, even when the extrusion process is carried out at unusually low extrusion coating temperatures. In another aspect the present invention relates to coatings containing high loadings of hygroscopic additives. Yet another aspect of the present invention relates to coatings containing additives that are heat sensitive.

## Background of the Invention

Extruding a coating of a polyolefin or blends of polyolefins onto a substrate, such as paper or aluminum foil, to form an extrusion coated substrate, is well known in the art. Various polyethylenes and blends of polyethylenes have been widely used as extrusion coating compositions. However, these polyethylene-based coatings must be extrusion coated at high temperatures to effect good adhesion to the substrate and therefore, have several drawbacks.

High temperature extrusion coating processes are not useful with substrates which are temperature sensitive. High temperature extrusion coating processes are also not practical when applying coatings containing additives which are temperature sensitive. The temperature of the high temperature extrusion coating process can be reduced very slightly but then the coating speed must also be reduced considerably to maintain good adhesion. However, high coating speeds are important so as to enable economically attractive operation of extrusion coating equipment.

What is desired, therefore, are polyethylene-based extrusion coating materials which contain thermally sensitive additives that are capable of adhering to substrates while producing substantially uniform extrusion coatings when applied to a variety of substrates, including photographic paper, employing a process which operates at adequate coating speeds at temperatures below those ordinarily used for extrusion coating processes.

## Statement of the Invention

In accordance with the present invention, there are provided compositions comprising a defined polyethylene component, specified quantities of defined tackifying resins, and defined loadings of thermally sensitive additives. The inventive compositions are capable of being applied to a variety of substrates by an extrusion coating process carried out at an extrusion coating temperature of less than 290°C (550°F). The inventive extrusion coating process is capable of applying substantially-uniform coatings having a thickness as thin as 0.0075 mm at a coating speed in excess of 300 meters (1,000 feet) per minute.

## Brief Description of the Figures

Figure 1 is a differential scanning calorimetry (DSC) curve of a polyethylene containing tackifier.

Figures 2a through 2d are DSC curves for several prior art polyethylene extrusion coating compositions.

Figure 3 illustrates the relationship of the thickness of the neat polyethylene tackifier blend versus the minimum level of tackifier needed for good adhesion.

## Detailed Description of the Invention

In accordance with the present invention, there are provided compositions capable of low temperature extrusion coating with good adhesion to substrate. The invention compositions comprise:

(a) a polyethylene component having a melt index in the range of 10 up to 100 dg per minute at 190°C and having a broad molecular weight distribution corresponding to a polydispersity index of at least 7,

(b) in the range of 0.5 up to 15 weight percent, based on the weight of the total of (a) plus (b), of a hydrocarbon tackifying resin having a Ring and Ball Softening Point (RBSP) in the range of 90° up to 150°C, and

(c) at least one additive selected from (1) at least 10 up to 50 wt % of calcium carbonate, aluminum oxide, silicon dioxide, diatomaceous earth, talc, zinc oxide, carbon black, and titanium dioxide, and (2) additives that degrade or volatilize at or below normal extrusion coating temperatures of 315°C.

In accordance with a particular embodiment of the present invention, there is provided a process for the low temperature extrusion coating of a substrate with a polyethylene type film having a thickness as thin as 0.0075 mm, wherein the extrusion coating process is capable of substantially uniformly coating with good adhesion at the thickness even at a coating speed of at least 300 meters (1,000 feet) per minute of substrate at temperatures less than 290°C (550°F).

The inventive process comprises applying the above-described compositions to at least one surface of the substrate by extrusion coating at a temperature in the range of 175° up to 290°C (350° up to 550°F). It is preferred that this extrusion coating temperature be in the range of 205°C to 275°C (400° up to 525°F). In some applications it is preferred that this extrusion coating temperature be in the range of 175° up to 250°C (350° up to 480°F). However, for photographic paper intended for resin coating, it is preferred that this temperature range be 230°C to 275°C (450° up to 525°F).

In accordance with yet another embodiment of the present invention, there are provided articles of manufacture comprising substrate having adhered thereto a polyethylene composition comprising:

(A) a polyethylene component having a melt index in the range of 10 up to 100 dg per minute at 190°C and having a broad molecular weight distribution corresponding to a polydispersity index of at least 7,

(B) in the range of 0.5 up to 15 weight percent, based on the weight of the total of (a) plus (b), of a hydrocarbon tackifying resin having a RBSP in the range of 90° up to 150°C, and

(C) at least one additive selected from (1) at least 10 up to 50 wt % of calcium carbonate, aluminum oxide, silicon dioxide, diatomaceous earth, talc, zinc oxide, carbon black, and titanium dioxide, and (2) additives that degrade or volatilize at or below normal extrusion coating temperatures of 315°C.

The melt index of the polyethylene component defined above must be such that it enables the resulting composition, in combination with a level of tackifier, to be extrusion coated with good adhesion to the substrate at a required temperature, thickness, and speed. Although the polyethylene component must have these properties, in combination with various levels of tackifier, the resulting composition is not so limited and does not necessarily have to meet these properties at all concentrations of tackifier. The amount of tackifier particularly in the range of 0.5 to 15 wt. %, needed to maintain good adhesion is proportional to the extrusion speed at a constant extrusion output rate and is inversely proportional to the coating thickness and extrusion temperature. Thus, an increase in extrusion speed may necessitate an increase in the amount of tackifier wherein as a decrease in the coating thickness or extrusion temperature may necessitate an increase in the amount of tackifier.

Polyethylene compositions useful in the practice of the present invention are materials having a melt index at 190°C in the range of 10 up to 100 decigrams per minute. Preferred polyethylene components are materials having a melt index in the range of 15 up to 80 decigrams per minute; with materials having melt index in the range of 20 up to 70 being most preferred.

Alternatively, the polyethylene component used in the practice of the present invention can be selected so as to provide a final composition having a melt index in the range of 15 up to 125 decigrams per minute at 190°C. Preferred polyethylene materials are those which provide a final composition having a melt index in the range of 30 up to 90 decigrams per minute; with final compositions having a melt index in the range of 30 up to 80 being most preferred.

Polyethylene materials useful in the practice of the present invention typically have densities in the range of 0.915 g/cc (ICC = 1 cm$^3$) up to 0.96 g/cc such as blends of polyethylenes of varying densities. Polyethylenes having densities in the range of 0.915 g/cc up to 0.945 g/cc are presently preferred materials.

It is desirable that the polyethylene materials employed in the practice of the present invention have a sufficiently broad molecular weight distribution so that the resulting composition is capable of being extrusion coated at temperatures in the range of 175° up to 290°C (350° up to 550°F). Those of skill in the art recognize that materials of very narrow molecular weight distribution will not be suitable for the desired extrusion coating application, while materials having intermediate, up to very broad molecular weight distributions, will be more suitable for the desired extrusion coating application. Typically, materials employed in the practice of the present invention will have a polydispersity index, i.e., ratio of weight average molecular weight (Mw) to number average molecular weight (Mn), of at least 7.

It is also desirable that the polyethylene materials employed in the practice of the present invention have a minimum melting point onset temperature of at least 95°C, as measured by differential scanning calorimetry (DSC). Materials having such melting properties provide excellent processing characteristics for extrusion coating applications.

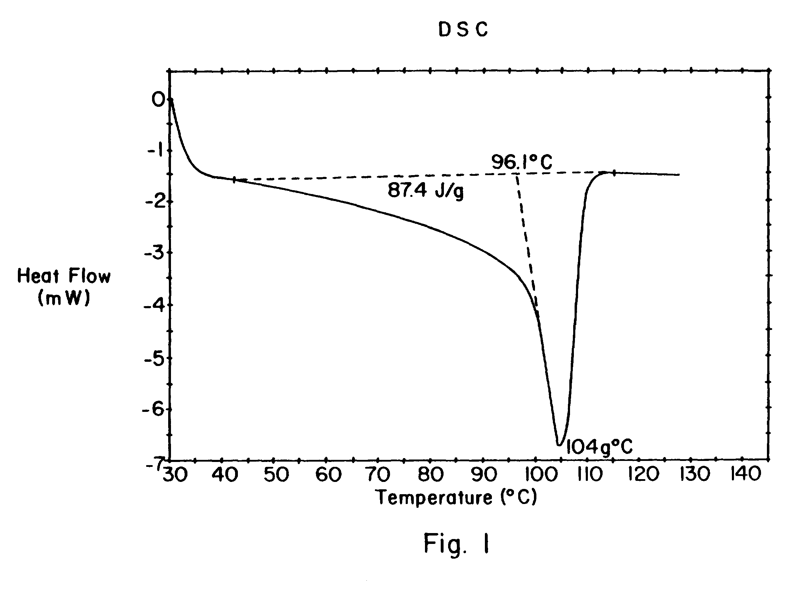

A DSC curve of an exemplary composition without the thermally sensitive additive is presented in Figure 1. The composition employed to obtain this DSC curve is a material having a melt index of 32 dg/min and a density of 0.915 g/cc. This material was prepared by blending 90 weight percent of a low density polyethylene having a melt index of 20 dg/min with 10 weight percent of NIREZ (trademark) 1135 tackifying resin. From the figure, it can be seen that the sample has an onset melting point (determined by extrapolation as shown) of 96.1°C, with an actual melting point of 105°C.

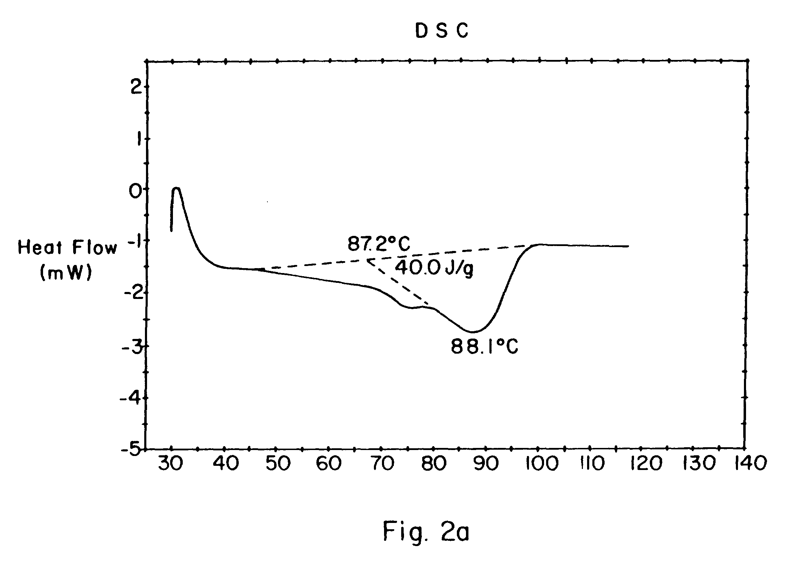

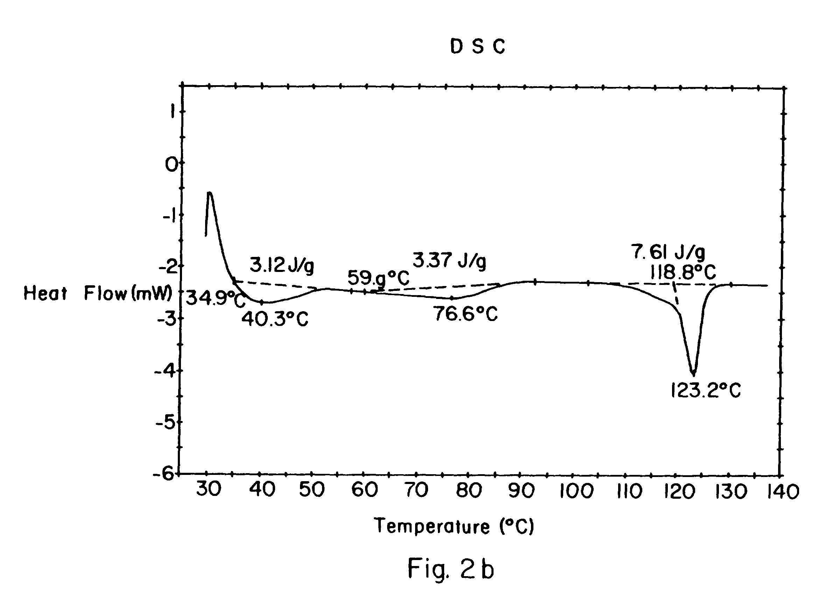

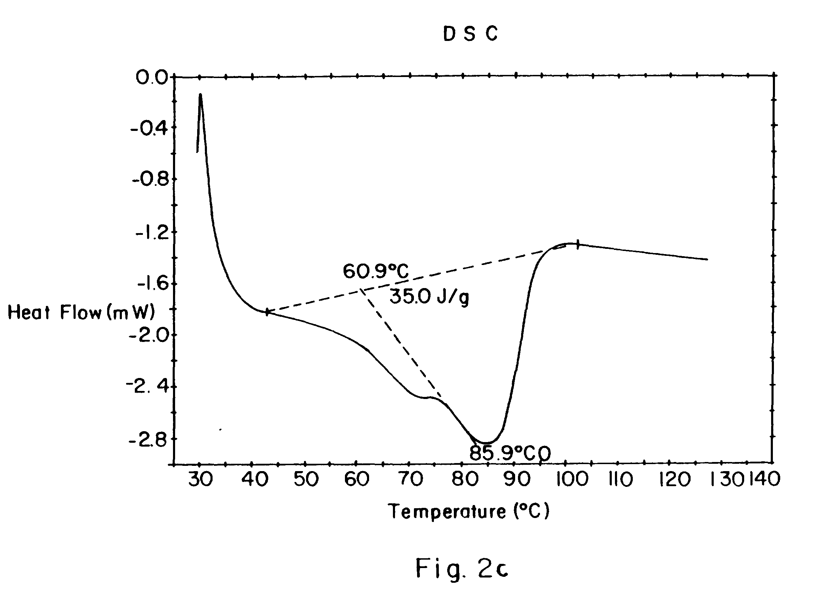

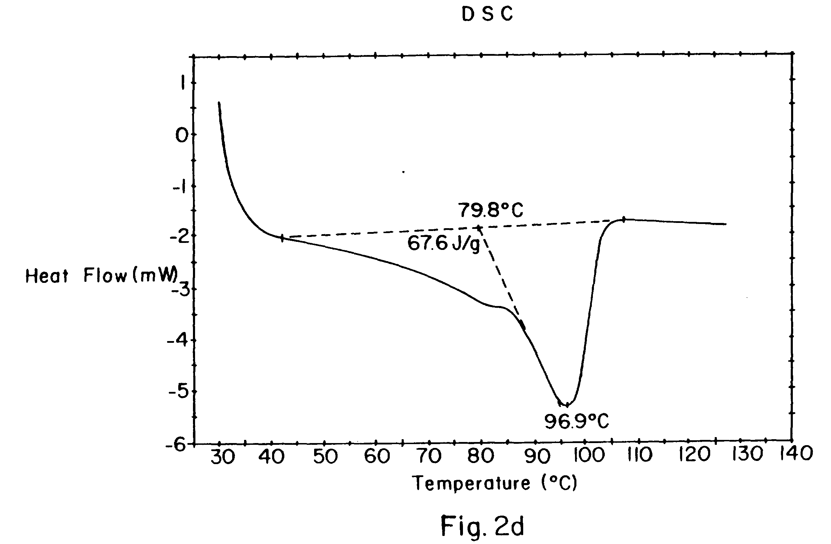

For comparison, DSC curves for several prior art, commercially available polyethylene extrusion coating compositions are presented in Figure 2a through 2b. In Figure 2a, the DSC curve for BYNEL CXA is presented. BYNEL CXA (trademark) is available from DuPont and is characterized as ethylene terpolymers containing a temperature stable ester in combination with high acidic functionality. In Figure 2b, the DSC curve for ADMER 507 (trademark) is presented. ADMER 507 is available from Mitsui Petrochemical and is characterized as a "polyolefin blend" for adhesion to ethylene-vinyl alcohol-type polyolefins. SURLYN 8255 (trademark), available from DuPont, is shown in Figure 2c. This material is a metal salt of an ethylene-acrylic acid copolymer. PRIMACOR 3440 (trademark), available from Dow, is shown in Figure 2d. This material is an ethylene-acrylic acid copolymer. Each of these prior art materials are seen to have an onset melting point substantially below that of the polyethylene tackifier composition blend of the present invention.

Polyethylene materials useful in the practice of the present invention can be prepared by polymerizing relatively high purity ethylene in a stirred reactor at pressures above 1,000 atmospheres (1 atmosphere = 98.1 kPa) and temperatures above 200°C, using a peroxide-type of catalyst, such as, for example, di-tertiarybutyl peroxide. Lower purity ethylene containing inert materials such as methane, ethane, carbon dioxide, may be introduced into the ethylene feed to control the purity thereof. Publications to which the reader is directed for further general details on the preparation of suitable low density polyethylenes are the text Polythene by Renfrew and Morgan, at pp. 11-17 and the article in Petroleum Refiner (1956) by Thomasson, McKetta and Ponder, found at p. 191.

The polyethylene composition of the present invention can be a polyethylene blend containing minor amounts of other polyolefins such as: polyethylene copolymers and propylene homo or copolymers. This minor amount of other polyolefin is generally less than 40 wt. %, preferably less than 20 wt. %, with less than 10 wt. % being most preferred.

The tackifying resins useful in the compositions of this invention have RBSP's of 90°C to 150°C, and can be a hydrocarbon resin such as DAC-B hydrocarbon resin prepared according to the process disclosed in U.S. Patent No. 3,701,760 as well as other hydrocarbon resins, synthetic and natural polyterpenes, rosin esters. The preferred tackifying resins are the synthetic tackifying resins due to their better color characteristics. The water white tackifying resins are more preferred, especially for photographic papers.

One suitable hydrocarbon tackifying resin is a hydrocarbon resin having a softening point of 130°C and available commercially as Eastman Resin H-130 (trademark) from Eastman Chemical Products, Inc. Other examples of commercially available resins that are suitable hydrocarbon tackifying resins include WINGTACK 95 (trademark) as sold by the Goodyear Tire and Rubber Co., the STA-TAC (trademark) and SUPER STA-TAC (trademark) resins sold by the Reichhold Division of Swift Adhesives Company, and EASTOTAC (trademark), a hydrogenated polymer of $C_5$ hydrocarbons (sold by Eastman Chemical Products, Inc.). Other hydrocarbon tackifying resins can be prepared by the polymerization of monomers consisting primarily of olefins and diolefins and include, for example, the residual by-product monomers resulting from the manufacture of isoprene. These hydrocarbon tackifying resins typically exhibit a RBSP of from 90° to 150°C; an acid number of from 0 to 2; and a saponification value of less than 1. The preferred hydrocarbon tackifying resins have higher functionality. Also suitable tackifiers are polymers of vinyl aromatic monomers, such as a preferred tackifier PICCOTEX 120 (trademark) (available from Hercules Chemical), a copolymer of alpha-methyl styrene and vinyl toluene. This material has an RBSP of 120°C.

Additional suitable resins are the rosin ester resins and the terpene polymers such as the polymeric, resinous materials including the dimers as well as high polymers obtained by polymerization and/or copolymerization of terpene hydrocarbons such as the alicyclic, monocyclic, and bicyclic monoterpenes and their mixtures, including allo-ocimene, carene, isomerized pinene, pinene, dipentene, terpinene, terpinolene, limonene, terpentine, a terpene cut or fraction, and various other terpenes. Other useful resin esters are the pentaerythritol esters of rosin having an acid number of 7 to 16 and a RBSP of 100° to 110°C, such as the Zonester (trademark) family of products available from Arizona Chemical. One such resin is the pentaerythritol ester of tall oil rosin having a RBSP of 100°C and an acid number of 11. The most preferred tackifiers are the polyterpenes such as the NIREZ (trademark) polyterpenes, polymerized from beta-pinenes including the most preferred tackifier, NIREZ 1135, having an RBSP between 125°C and 140°C, available from the Reichold Division of Swift Adhesives Company.

The quantity of tackifying resin employed in the inventive compositions can vary widely, typically falling within the range of 0.5 up to 15 weight percent, based on the weight of the total weight of polyethylene component and tackifying resin. Preferred quantities of tackifying resin fall within the range of 1 up to 10 weight percent. These quantities are preferred because at these levels of tackifier, maximum adhesion per quantity of tackifier added is achieved. Thus, at a given thickness at lower levels of tackifier, reduced adhesion is observed while little added benefit is obtained with higher levels of tackifier.

Although the preferred tackifiers are water white they will discolor and degrade with time rendering the tackifier unsatisfactory for use, particularly for photographic purposes. It is therefore important that these tackifiers be stabilized with a stabilizer such as a hindered phenolic antioxidant. Examples of hindered phenolic antioxidants include butylated hydroxytoluene (BHT) and its derivatives such as, IRGANOX 1076, IRGANOX 1010, with Irganox 1010 being most preferred. The IRGANOX (trademark) stabilizers are available from Ciba-Geigy. The amount of stabilizer used in the composition is directly proportional to the amount of tackifier present in the composition. The amount of this stabilizer generally ranges from 0.1 up to 0.3 weight percent based on the total of polyethylene and tackifier. This amount of stabilizer is preferably between 0.1 and 0.2 weight percent.

The thermally sensitive additives that can be used in the present invention include (1) relatively high loadings of additives that contain a sufficient amount of volatiles that can create unsatisfactory imperfections in extrusion coatings applied at relatively high extrudate temperatures, and (2) additives that degrade or volatilize below normal extrusion coating temperatures of 315°C (600°F) but above the melting point of polyethylene. We have discovered that the thermally sensitive additives that contain or produce relatively high amounts of volatiles during extrusion coating are concentration limited at normal extrusion coating temperatures such as above 315°C (above 600°F). In other words, relatively high loadings of these additives produce unsatisfactory imperfections such as voids, lacing, pigment lines, moisture lines, bubbles at the normal extrusion coating temperatures. We have discovered that these unsatisfactory imperfections are due to the release of volatiles from particulate additives that are absorbed or adsorbed compounds on or in the additive particles, such as water, including water of hydration. It was unexpectedly discovered that by reducing the extrudate temperature as little as 25°C to 290°C (50°F to 550°F), these volatiles are not driven off in such a way as to produce undesirable imperfections in the resulting coatings. The volatiles that have a relatively high vapor pressure or are easily driven off are of no consequence and do not cause defects in the coatings since it is believed that these volatiles vaporize or are driven off fairly early on in the process and back vent out of the extruder.

It is believed that the process of the present invention can successfully extrusion coat compositions containing high loadings of most hygroscopic or hydrophilic additives. The present invention permits inclusion of new additives that heretofore were not normally extrusion coatable due to their volatile content. Additionally, the present invention permits inclusion of significantly higher amounts of presently known extrusion coating additives.

The relatively high loadings of additives or combination of additives that contain high amounts of volatiles are in excess of 10 wt. % and up to 50 wt. % based on the total, more preferably in excess of 20 wt. % up to 50 wt. %. Examples of suitable additives include calcium carbonate, aluminum oxide, silicon dioxide, diatomaceous earth, talcs, zinc oxide, carbon blacks, titanium dioxide, and mixtures thereof. The most preferred additives are carbon blacks and titanium dioxides. However, certain additives such as carbon black in concentrations as low as 6% cannot be successfully extrusion coated by prior art methods.

In photographic applications the normal concentration of additives is usually less than 20 %. Of this a combination of titanium dioxide and zinc oxide is generally less than 18% with titanium dioxide ranging from 9 to 18% and zinc oxide ranging from 0 to 3%. Other additives are no more than 1% total and include optical brighteners, stabilizers, antioxidants, and colorants. The process of the present invention permits the amount of titanium dioxide to be greater than 18% up to 50% and allows the zinc oxide to be greater than 3% with a total combination of titanium dioxide and zinc oxide to be greater than 18% but less than 50% based on the total. This increase in titanium dioxide and zinc oxide can result in an improvement in opacity, whiteness, lightness and image sharpness.

The additives that degrade or volatilize themselves at or below normal extrusion temperatures (600°F, 315°C) are capable of causing undesirable imperfections in the final coating and/or are not present in their original form and/or concentration. Examples of suitable additives that degrade or volatilize at these temperatures include organic colorants such as phthalocyanines, organic antioxidants, organic antistats, slip agents, optical brighteners, lubricants. Amounts of these additives are preferably within the range between 0.05 and 10 wt. %, based on the total. More preferably between 0.1 and 5 wt. % with 0.1 and 3 wt. % being most preferred.

Additionally, other suitable additives that degrade at relatively high temperatures include biodegradable organic polymers preferably up to 10 weight percent. Compounds contemplated by the term "biodegradable organic polymer" include polymeric materials which are themselves intrinsically sensitive to direct enzyme chain scission in the presence of micro-organisms which occur profusely in the environment. Exemplary materials contemplated by the above definition include polymeric carbohydrates such as corn starch.

When employed, quantities in the range of 1 up to 10 weight percent, based on the total, of biodegradable organic polymer are typical. Preferably, in the range of 4 up to 6 weight percent of biodegradable organic polymer will be employed.

Other additives, stabilizers, fillers can be added to the composition of the present invention. Such materials can be present in the components forming the polymer blend, or may be added when the polymers are blended to form the extrusion coating composition.

The inventive compositions can optionally further contain in a range of 25 up to 200 parts per million of a transition metal pro-oxidant. Transition metal compounds contemplated for use in the practice of the present invention are salts formed by combining transition metals such as cobalt, manganese, and copper with organic acids of sufficiently high molecular weight to give salts soluble in the polymer blends employed.

As employed herein, the term "transition metal" is intended to include elements having greater than 8, and less than 18, electrons in the outer shell of the ionic species. Transition metals are thus usually capable of electron transitions between their outer shells. Thus, the variable valency states which result render these elements capable of inducing oxidation reactions. In practice, those transition elements which are highly toxic and/or radioactive are extremely rare and costly, and thus are not normally encountered in industrial use as oxidation catalysts. More typically encountered transition metals whose salts and complexes are useful for such applications include cerium, zinc, copper, silver, nickel, cobalt, iron, manganese, chromium, and vanadium. These elements can be used in the form of such salts as possess an adequate level of solubility in the polymer melt, typically including such forms as stearates, oleates, behenates, miristates, erucates, lineoleates, naphthanates, or complexes such as acetonyl acetates, 8-hydroxyquinolinates, metal amine salt complexes, as well as mixtures of any two or more thereof.

Preferred quantities of pro-oxidant, when employed, fall in the range of 100 up to 150 parts per million, based on the total weight of the polyethylene component.

The compositions of this invention may be prepared in various ways such as dry blending and then passing through a compounding extruder, compounding on a milling roll or in a Banbury mixer by fusion. Any method whereby the components are blended will be useful in the present invention. For example, pellets of each polymer can be blended mechanically and the blend then fed to an extruder where it is fused and extruded.

In addition to the above noted advantages, we have discovered that the low temperature extrusion process of the present invention reduces the amount of curl in the final coated product as well as reduces the amount of energy required to conduct the extrusion coating process itself.

Processes for applying the invention extrusion coating materials to a substrate are well known in the art and are well within the skill of the artisan. Similarly, processes employing the invention extrusion coating materials for the extrusion/lamination of two or more substrates are well known in the art. Those of skill in the art can readily apply the invention compositions to such processes.

Substrates contemplated for use in the practice of the present invention include papers, photographic papers, paperboards, fibers, polymeric materials, metal foils. Polymeric substrates include polyolefins or functionally modified polyolefins, polyesters or functionally modified polyesters, ethylene-vinyl alcohol copolymers or functionally modified derivatives thereof, polyamides or functionally modified polyamides, including embossed and/or oriented polymeric substrates with and without microvoiding agents/pigments such as titanium dioxide, barium sulfate, and calcium carbonate.

The inventive compositions, upon application to substrate by extrusion coating techniques, form a destructive bond, i.e., the substrate-coating bond is sufficiently strong that efforts to separate the coating from the substrate cause destruction of either the coating or the substrate.

This invention can be further illustrated by the following examples of preferred embodiments thereof, although it will be understood that these examples are included merely for purposes of illustration and are not intended to limit the scope of the invention unless otherwise specifically indicated.

Examples

The following five examples illustrate the relationship of the amount of tackifier to the extrusion speed and coating thickness. The samples in the following five examples were extrusion coated under these identical conditions:

| | |
|---|---|
| Extrudate temperature: | 182°C (360°F) |
| Die opening: | 0.051 cm (0.020-inch) |
| Extrusion output rate: | 4.536 kg/hr/2.54 cm (10-lb/hr/inch) of die width |
| Die Opening-to-Nip distance: | 13.3 cm (5.25-inches) |
| Laminator's Maximum Speed: | 427 meters per minute (mpm) 1400-fpm |

Heater settings on the extruder barrel, adapter, and die were 198°C (388°C) or lower.

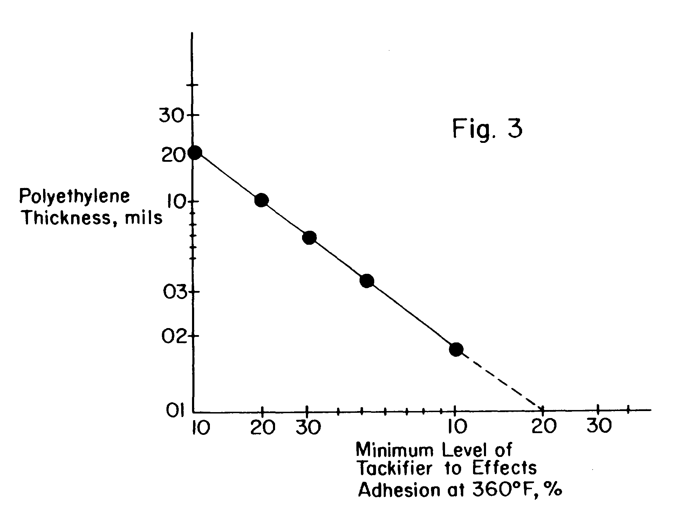

These examples are more easily understood by the graph in Figure 3. This graph illustrates the relationship of thickness versus the minimum level of tackifier needed to provide excellent adhesion for each of the following five examples.

The following five examples plotted a hyperbolic relationship:

$$(t) \qquad (N) = 2$$

where t is the thickness of the tackifier-modified polyethylene, expressed in mm (mils); and N is the level of tackifier (Nirez 1135) in the polyethylene, expressed in weight percent. This observation predicts that, a 0.05 mm (2-mil) polyethylene thickness in a laminated paper-to-paper structure, requires only a minimum level of 1 weight percent of tackifier to provide excellent adhesion. This observation also predicts that, a thinner polyethylene laminate of 0.005 mm (0.2-mil) requires a higher level (10 weight percent) of tackifier for good adhesion.

Example 1

A 70 dg/min melt index polyethylene containing 1 percent by weight of a tackifier, Nirez 1135 (a polymerized beta-pinene having a RBSP of 135°C), was used to laminate natural kraft paper to kraft paper. The extrudate temperature was 182°C (360°F). The die throughput rate was 10 pounds per hour per inch of die width. The lamination was taken to 427 mpm (1,400 fpm) with the extrudate providing a uniform thickness. The final thickness was 0.0075 mm (0.3 mils). At this thickness and speed the material did not have good adhesion. However, the material provided a fiber tear (destructive) adhesion to both layers of kraft paper at slower coating speeds up to and including 61 mpm (200 fpm) at a thickness of at least 0.05 mm (2 mil).

Example 2

A 70 dg/min melt index polyethylene containing 2 percent by weight of a tackifier, Nirez 1135, was used to laminate natural kraft paper to kraft paper. The extrudate temperature was 182°C (360°F). The die throughput rate was 10 pounds per hour per inch of die width. The lamination was taken to 427 mpm (1,400 fpm) with the extrudate providing a uniform thickness. The final thickness was 0.0075 mm (0.3 mils). At this thickness and speed the material did not have good adhesion. However, the material provided a fiber tear (destructive) adhesion to both layers of kraft paper at slower coating speeds up to and including 122 mpm (400 fpm) at a thickness of at least 0.025 mm (1 mil).

Example 3

A 70 dg/min melt index polyethylene containing 3 percent by weight of a tackifier, Nirez 1135, was used to laminate natural kraft paper to kraft paper. The extrudate temperature was 182°C (360°F). The die throughput rate was 10 pounds per hour per inch of die width. The lamination process was taken to 1,400 fpm with the extrudate providing a uniform thickness. The final laminate thickness was 0.0075 mm (0.3 mils). At this thickness and speed the material did not have good adhesion. However, the material provided a fiber tear (destructive) adhesion to both layers of kraft paper at slower coating speeds up to and including 183 mpm (600-fpm) at a thickness of at least 0.0187 mm (0.75 mil).

Example 4

A 32 dg/min melt index polyethylene containing 5 percent by weight of a tackifier, Nirez 1135, was used to laminate natural kraft paper to kraft paper. The extrudate temperature was 182°C (360°F). The die throughout rate was 10 pounds per hour per inch of die width. The lamination was taken to 427 mpm (1,400 fpm) with the extrudate providing a uniform thickness. The final thickness was 0.0075 mm (0.3-mil). At this thickness and speed the material did not have good adhesion. However, the material provided a fiber tear (destructive) adhesion to both layers of kraft paper at a coating speed of 305 mpm (1,000 fpm at a 0.01 mm, 0.4 mil thickness).

Example 5

A 36 dg/min melt index polyethylene containing 10 percent by weight of a tackifier, Nirez 1135, was used to laminate natural kraft paper to kraft paper. The extrudate temperature was 182°C (360°F). The die throughout rate was 10 pounds per hour per inch of die width. The lamination was taken to a speed of 421 mpm (1,400 fpm) with the extrudate providing a uniform thickness. The final thickness was 0.0075 mm (0.3 mil). The material provided a fiber tear (destructive) adhesion to both layers of kraft paper at 396 mpm (1,300 fpm at a 0.0075 mm, 0.3 mil thickness).

The following ten examples show the criticality of melt index in achieving the required minimum coating thickness of at least 0.0075 mm at extrusion coating speeds in excess of 300 m per minute. The samples were extrusion coated under these identical conditions:

| | |
|---|---|
| Extrudate temperature: | 227°C (440°F) |
| Die Opening: | 0.051 cm (0.020 - inches) |
| Extrusion Output Rate: | 4.536 kg/hr/2.54 cm (10-lb/hr/inch) of die width |
| Die Opening-to-Nip distance: | 13.3 cm (5.25-inches) |
| Laminator's Maximum Speed: | 427 mpm (1400-fpm) |

Heater settings on the extruder barrel, adapter, and die were 238°C (460°F) or lower.

Example 6

A 3.5 dg/min melt index polyethylene containing 10 percent by weight of a tackifier, Nirez 1135, was extrusion coated as described above. It was only possible to achieve a minimum thickness of 0.033 mm (1.3 mils) at a maximum speed of 100 mpm (325 fpm), as limited by extrudate edge tear.

### Example 7

A 7.0 dg/min melt index polyethylene containing 10 percent by weight of a tackifier, Nirez 1135, was extrusion coated as described above. It was only possible to achieve a minimum thickness of 0.023 mm (0.9 mils) at a maximum speed of 145 mpm (475 fpm), as limited by extrudate edge tear.

### Example 8

A 13 dg/min melt index polyethylene containing 10 percent by weight of a tackifier, Nirez 1135, was extrusion coated as described above. It was only possible to achieve a minimum thickness of 0.013 mm (0.5 mil) at a maximum speed of 255 mpp (875-fpm), as limited by extrudate edge tear.

### Example 9

A 20 dg/min melt index polyethylene containing 10 percent by weight of a tackifier, Nirez 1135, was extrusion coated as described above. It was only possible to achieve a minimum thickness of 0.010 mm (0.4-mils) at a maximum speed of 320 mpm (1,050 fpm), as limited by extrudate edge tear.

### Example 10

A 32 dg/min melt index polyethylene containing 10 percent by weight of a tackifier, Nirez 1135, was extrusion coated as described above. It was only possible to achieve a minimum thickness of less than 0.0075 mm (0.3 mil) at a maximum speed in excess of 430 mpm (1,400 fpm). No extrudate edge tear or edge weaving were observed at a coating speed of 430 mpm (1,400 fpm).

### Example 11

A 50 dg/min index polyethylene containing 10 percent by weight of a tackifier, Nirez 1135, was extrusion coated as described above. It was possible to achieve a minimum thickness of less than 0.0075 mm (0.3 mil) at a maximum speed in excess of 430 mpm (1,400 fpm). No extrudate edge tear or edge weaving were observed at a coating speed of 430 mpm (1,400 fpm).

### Example 12

A 80 dg/min melt index polyethylene containing 10 percent by weight of a tackifier, Nirez 1135, was extrusion coated as described above. It was possible to achieve a minimum thickness of less than 0.0075 mm (0.3 mil) at a maximum speed in excess of 430 mpm (1,400 fpm). No extrudate edge tear or edge weaving were observed at a coating speed of 430 mpm (1,400 fpm).

### Example 13

A 100 dg/min melt index polyethylene containing 10 percent by weight of a tackifier, Nirez 1135, was extrusion coated as described above. It was only possible to achieve a minimum thickness of 0.030 mm (1.2 mils) at a maximum speed of 107 mpm (350 fpm), as limited by severe weaving of the extrudate edge.

### Example 14

A 130 dg/min melt index polyethylene containing 10 percent by weight of a tackifier, Nirez 1135, was extrusion coated as described above. It was only possible to achieve a minimum thickness of 0.039 mm (1.5 mils) at a maximum speed of 84 mpm (275 fpm), as limited by severe weaving of the extrudate edge.

### Example 15

A 200 dg/min melt index polyethylene containing 10 percent by weight of a tackifier, Nirez 1135, was extrusion coated as described above. It was only possible to achieve a minimum thickness of 0.053 mm (2.1 mils) at a maximum speed of 61 mpm (200 fpm), as limited by severe weaving of the extrudate edge.

The following examples illustrate the ability of the present invention to extrusion coat compositions containing relatively high loadings of additives that contain high amounts of volatiles that normally create unsatisfactory imperfections at normal extrusion temperatures.

Example 16

This example illustrates the coating versatility of a photographic quality paper coating resin formulation as a function of hygroscopic additive concentration and extrudate temperature in the extrusion coating process. Varying concentrations of the following two compositions were dry blended to effect varying levels of the hygroscopic additives as illustrated in Table 1 below.

Concentrate composition 1:

37.57 wt. % anatase titanium dioxide
9.0 % zinc oxide
1.5 % calcium stearate
0.15 optical brightener
0.2779 Irganox 1076
0.5 inorganic blue pigment
0.02 % organic red pigment

The remainder being a polyethylene having a melt index of 4 dg/min and a density of 0.92 g/cc.

Concentrate Composition 2:

10% Nirez 1135
0.1% Irganox 1010

The remainder being a polyethylene having a melt index of 20 dg/min and a density of 0.916 g/cc.
The samples in Table 1 below were extrusion coated under the following conditions:

| | |
|---|---|
| Die Opening: | 0.051 cm (0.020 - inches) |
| Extrusion Output Rate: | 4.536 kg/hr/2.54 cm (10-lb/hr/inch) of die width |
| Die Opening-to-Nip distance | 13 cm (5 inches) |
| Coating Weight: | 33-g/m$^2$ |

TABLE 1

| Percent Nirez % 1135 | Hygroscopic Additive %TiO2 | %ZnO | %Other Additives | Defects in Coating at the Following Extrudate Temp. | | | | |
|---|---|---|---|---|---|---|---|---|
| | | | | 250°C(400°F) | 232°C(450°F) | 290°C(550°F) | 332°C(630°F) | |
| 6.8% | 12% | 2.9% | 0.8% | None | None | None | very light pigment lines | |
| 6.0% | 15% | 3.6% | 1.0% | None | None | None | pigment lines | |
| 4.7% | 20% | 4.8% | 1.3% | None | None | very light pigment lines | pigment lines | |
| 3.3% | 25% | 5.9% | 1.6% | None | None | pigment lines | pigment lines | |
| 2.2% | 30% | 7.0% | 1.9% | None | None | pigment lines | extreme lacing | |
| 0* | 38% | 9.0% | 2.4% | – | None | pigment lines voids | extreme lacing | |

*This extrusion coated composition contained 100% of concentrate composition one and contained no Nirez tackifier. This sample was included to illustrate the relationship of temperature and defects; however, the resulting coating had poor adhesion to the substrate due to the lack of tackifier.

The above example illustrates that the process of the present invention can produce perfect extrusion coatings with high loadings of certain hygroscopic additives if a proper extrudate temperature is selected.

Example 17

The following example illustrates the relationship of the amount of tackifier to the adhesion level between paper and polyethylene for extrusions at 315°C (600°F) without tackifier and at 257°C (495°F) with tackifier. These coatings were made onto photographic grade paper using low density polyethylene and the results are illustrated below in Table 2. This example was extrusion coated under the following conditions:

| | |
|---|---|
| Extrudate Temp.: | See Below |
| Die Opening: | 0.102 cm (0.040-inch) |
| Extrusion Output rate: | 2.858 kg/hr/2.54 cm (6.3 lbs/hr/inch) of die width |
| Die Opening-to-Nip: | 13.3 cm (5.25 inches) |
| Corona Discharge Treatment (CDT) | On |
| Coating Weight: | 48 g/m$^2$ |

| Extrusion Temp. | Tackifier Level (% Nirez 1135) | Adhesion Level gms/1.27 cm (gms/0.5 inch) |
|---|---|---|
| 315°C (600°F) | 0 | 540 |
| 257°C (495°F) | 1% | 130 |
| 257°C (495°F) | 3% | 300 |
| 257°C (495°F) | 6% | 560 |
| 257°C (495°F) | 10% | 980 |

*This coating composition also contained 0.1 wt. % antioxidant and the remainder was polyethylene having a melt index of 20 dg/min and a density of 0.916 g/cc.

This example indicates that the adhesion between the polyethylene and the photographic grade paper at lower temperatures can be improved by increasing the amount of tackifier and that the adhesion level achieved by extrusion coating without tackifier at 315°C (600°F) can be met or exceeded by extrusion at 257°C (495°F) at certain amounts of tackifier.

Example 18

The following example illustrates that the amount of titanium dioxide can be significantly increased in the resin layer of a resin coated photographic grade paper without producing underlying coating imperfections as illustrated in Table 3.

| | |
|---|---|
| Extrudate Temp.: | See Table 3 |
| Die Gap: | 0.102 cm (0.040-inch) |
| Extrusion Output Rate: | 2.858 kg/hr/2.54 cm (6.3 lbs/hr/inch) of die width |
| Die Opening to Nip: | 13.3 cm (5.25 inch) |
| CDT: | On |

## TABLE 3*

| Extrudate Temperature Adhesion | Extrusion Thickness mm (Mils) | % TiO2 | % ZnO | % Tackifier | Nirez Coating Quality |
|---|---|---|---|---|---|
| 324°C (615°F) Excellent | 0.025 (1) | 12 | 3 | 0 | Excellent |
| 324°C (615°F) | 0.025 (1) | 24 | 3 | 0 | Pigment Lines |
| 263°C (505°F) Excellent | 0.025 (1) | 24 | 3 | 9 | Excellent |
| 263°C (505°F) Excellent | 0.0125 (0.5) | 24 | 3 | 9 | Excellent |
| 263°C (505°F) Excellent | 0.025 (1) | 12 | 3 | 9 | Excellent |

*These coating compositions also contained between 0.25 and 0.5 calcium stearate and between 0.05 and 0.1% antioxidant with the remainder being polyethylene having a melt index of 20 dg/min and density of 0.916 g/cc.

This example shows that the amount of titanium dioxide that is capable of being extruded at 600°F is limited by the quality of coating. However, this quality limit does not exist when the tackifier is present at the lower temperature. This invention allows potential improvements in whiteness, brightness, lightness and image sharpness of photographic papers. In addition, the thickness of the extrusion coating can also be reduced substantially without any detriment to the quality of the resin coated photographic support.

Example 19

This example illustrates the coating quality as a function of hygroscopic additive concentration and extrudate temperature in the extrusion coating process. Varying concentrations of the following two compositions were dry blended to effect varying levels of the hygroscopic additive as illustrated in Table 4 below.

Concentrate Composition 1:

30% Carbon Black containing 1% Water
The remainder being a polyethylene having a melt index of 12 dg/min and a density of 0.918 g/cc.

Concentrate Composition 2:

10% Nirez 1135 0.1 wt. % Irganox 1010
The remainder being a polyethylene having a melt index of 20 dg/min and a density of 0.916 g/cc.
The following samples in Table 4 were extrusion coated under the following conditions:

| Extrudate Temperatures: | See Table |
|---|---|
| Die Opening: | 0.051 cm (0.020-inches) |
| Extrusion Output Rate: | 4.536 kg/hr/2.54cm (10 lb/hr/inch) die width |
| Die Opening-to-Nip distance | 13 cm (5 inches) |
| Coating Weight: | 33-g/m$^2$ |

## TABLE 4

| % Nirez | % Water in the Extrudate* | % Carbon Black | Defects in Coating at the following extrusion temperatures | |
|---|---|---|---|---|
| | | | 232°C (450°F) | 315°C (600°F) |
| 8.2 | 0.15 | 5 | None | Voids & Light Moisture Lines |
| 6.7 | 0.3 | 10 | None | Extreme Lacing |
| 5.0 | 0.5 | 15 | None | Extreme Lacing |
| 3.3 | 0.6 | 20 | None | Extreme Lacing |

*The carbon black contains 1% water determined by thermogravimetric analysis (TGA).

The above example illustrates that the process of the present invention produces perfect extrusion coatings with high loadings of the hygroscopic additive, carbon black, if a proper extrudate temperature is selected.

EP 0 609 220 B1

**Claims**

1. A composition capable of low temperature extrusion coating with good adhesion to substrate, said composition comprising:

    (a) a polyethylene component having a melt index in the range of 10 up to 100 dg per minute at 190°C and having a broad molecular weight distribution corresponding to a polydispersity index of at least 7,
    (b) in the range of 0.5 up to 15 weight percent, based on the weight of the total of (a) plus (b), of a hydrocarbon tackifying resin having a Ring and Ball Softening Point (RBSP) in the range of 90° up to 150°C, and
    (c) at least one additive selected from (1) at least 10 up to 50 wt % of calcium carbonate, aluminum oxide, silicon dioxide, diatomaceous earth, talc, zinc oxide, carbon black, and titanium dioxide, and (2) additives that degrade or volatilize at or below normal extrusion coating temperatures of 315°C.

2. The composition in accordance with Claim 1 wherein said polyethylene component has a melt index in the range of 20 up to 80 dg per minute.

3. The composition in accordance with Claim 1 wherein said hydrocarbon tackifying resin is present in the range of 1 up to 10 wt. % and is selected from polymerized beta-pinenes, hydrogenated polymers of $C_5$ hydrocarbons, alpha-methylstyrene-vinyl toluene copolymers, or pentaerythritol esters of tall oil rosin.

4. The composition in accordance with Claim 3 wherein said tackifying resin is a polymerized 'beta-pinene.

5. The composition in accordance with Claim 1 wherein the additive of (1) is a hygroscopic or hydrophilic additive.

6. The composition according to Claim 5 wherein the additive is selected from carbon blacks and titanium dioxides.

7. The composition in accordance with Claim 5 wherein the hygroscopic or hydrophilic additive is present in the composition in a concentration in excess of 20 wt. % up to 50 wt. %.

8. The composition in accordance with Claim 1 wherein the additive of (2) is selected from organic colorants, organic antioxidants, organic antistats, slip agents, optical brighteners, and lubricants.

9. The composition in accordance with Claim 8 wherein the additive of (2) is present in a concentration range between 0.05 and 10 wt. % based on the total.

10. A process for the low-temperature extrusion coating of a substrate with a polyethylene film having a thickness of at least 0.0075 mm, said process comprising:

    (a) applying the composition of Claim 1 to at least one surface of said substrate by extrusion coating at a temperature in the range of 175° up to 290°C.

11. The process in accordance with Claim 10 wherein said substrate is selected from papers, photographic papers, paperboards, fibers, polymeric materials, and metal foils.

12. The article produced by the process of Claim 11.

13. An article of manufacture comprising a substrate having adhered thereto a polyethylene composition comprising:

    (A) a polyethylene component having a melt index in the range of 10 up to 100 dg per minute at 190°C and having a broad molecular weight distribution corresponding to a polydispersity index of at least 7,
    (b) in the range of 0.5 up to 15 weight percent, based on the weight of the total of (a) plus (b), of a hydrocarbon tackifying resin having a Ring and Ball Softening Point (RBSP) in the range of 90° up to 150°C, and
    (C) at least one additive selected from (1) at least 10 up to 50 wt % of calcium carbonate, aluminum oxide, silicon dioxide, diatomaceous earth, talc, zinc oxide, carbon black, and titanium dioxide, and (2) additives that degrade or volatilize at or below normal extrusion coating temperatures of 315°C.

14. The article of manufacture in accordance with Claim 13 wherein said substrate is selected from papers, photographic papers, paperboards, fibers, polymeric materials, or metal foils.

**Patentansprüche**

1. Zusammensetzung, welche zur Niedrigtemperatur-Extrusionsbeschichtung mit guter Haftung am Substrat in der Lage ist, wobei die Zusammensetzung folgendes umfaßt:

   (a) eine Polyethylenkomponente mit einem Schmelzindex in einem Bereich von 10 bis 100 dg / min bei 190°C und mit einer breiten Molekulargewichtverteilung entsprechend einem Polydispersitätsindex von mindestens 7,

   (b) in einem Bereich von 0,5 bis 15 Gew.-%, bezogen auf das Gesamtgewicht aus (a) plus (b), eines klebrigmachenden Kohlenwasserstoffharzes mit einem Ring-Kugel-Erweichungspunkt (RBSP) in einem Bereich von 90° bis 150°C, und

   (c) mindestens ein Additiv, gewählt aus (1) mindestens 10 bis 50 Gew.-% Calciumcarbonat, Aluminiumoxid, Siliciumdioxid, Diatomerde, Talk, Zinkoxid, Ruß und Titandioxid, sowie (2) Additive, die sich bei oder unterhalb von normalen Extrusionsbeschichtungstemperaturen von 315°C zersetzen oder verflüchtigen.

2. Zusammensetzung gemäß Anspruch 1, wobei die Polyethylenkomponente einen Schmelzindex in einem Bereich von 20 bis 80 dg / min hat.

3. Zusammensetzung gemäß Anspruch 1, wobei das klebrigmachende Kohlenwasserstoffharz in einem Bereich von 1 bis 10 Gew.-% vorliegt und gewählt ist aus polymerisierten β-Pinenen, hydrierten Polymeren von $C_5$-Kohlen-wasserstoffen, a-Methylstyrol-Vinyltoluol-Co-polymeren oder Pentaerythritolestern von Tallöl-Kolophonium.

4. Zusammensetzung gemäß Anspruch 3, wobei das klebrigmachende Harz polymerisiertes β-Pinen ist.

5. Zusammensetzung gemäß Anspruch 1, wobei das Additiv von (1) ein hygroskopisches oder hydrophiles Additiv ist.

6. Zusammensetzung gemäß Anspruch 5, wobei das Additiv aus Ruß bzw. Carbon-Blacks und Titandioxiden gewählt ist.

7. Zusammensetzung gemäß Anspruch 5, wobei das hygroskopische oder hydrophile Additiv in der Zusammensetzung in einer Konzentration von mehr als 20 Gew.-% bis 50 Gew.-% vorliegt.

8. Zusammensetzung gemäß Anspruch 1, wobei das Additiv von (2) aus organischen Farbstoffen, organischen Antioxidantien, organischen Antistatikmitteln, Anti-Blockmitteln, optischen Aufhellern und Gleitmitteln gewählt ist.

9. Zusammensetzung gemäß Anspruch 8, wobei das Additiv von (2) in einer Konzentration in einem Bereich von 0,05 bis 10 Gew.-%, bezogen auf das Gesamtgewicht, vorliegt.

10. Verfahren für die Niedrigtemperatur-Extrusionsbeschichtung eines Substrats mit einer Polyethylenfolie mit einer Dicke von mindestens 0,0075 mm, wobei das Verfahren folgendes umfaßt:
    (a) Auftragen der Zusammensetzung von Anspruch 1 auf mindestens eine Oberfläche des Substrats durch Extrusionsbeschichtung bei einer Temperatur in einem Bereich von 175° bis 290°C.

11. Verfahren gemäß Anspruch 10, wobei das Substrat aus Papieren, photographischen Papieren, Pappen, Fasern, polymeren Materialien und Metallfolien gewählt ist.

12. Artikel, welcher mit dem Verfahren von Anspruch 11 hergestellt wurde.

13. Erzeugnis, umfassend ein Substrat, dem eine Polyethylenzusammensetzung anhaftet, umfassend:

    (A) eine Polyethylenkomponente mit einem Schmelzindex in einem Bereich von 10 bis 100 dg / min bei 190°C und mit einer breiten Molekulargewichtverteilung entsprechend einem Polydispersitätsindex von mindestens 7,

    (b) in einem Bereich von 0,5 bis 15 Gew.-%, bezogen auf das Gesamtgewicht aus (a) plus (b), eines klebrigmachenden Kohlenwasserstoffharzes mit einem Ring-Kugel-Erweichungspunkt (RBSP) in einem Bereich von

EP 0 609 220 B1

90° bis 150°C, und

(C) mindestens ein Additiv, gewählt aus (1) mindestens 10 bis 50 Gew.-% Calciumcarbonat, Aluminiumoxid, Siliciumdioxid, Diatomerde, Talk, Zinkoxid, Ruß und Titandioxid, sowie (2) Additive, die sich bei oder unterhalb von normalen Extrusionsbeschichtungstemperaturen von 315°C zersetzen oder verflüchtigen.

**14.** Erzeugnis gemäß Anspruch 13, wobei das Substrat aus Papieren, photographischen Papieren, Pappen, Fasern, polymeren Materialien oder Metallfolien gewählt ist.

**Revendications**

**1.** Composition capable de donner un revêtement par extrusion à basse température adhérant bien à un support, ladite composition comprenant :

(a) un composant polyéthylénique ayant un indice de fusion situé dans l'intervalle allant de 10 à 100 dg par minute à 190°C et ayant une large distribution de masses moléculaires correspondant à un indice de polydispersité d'au moins 7,
(b) une résine hydrocarbonée augmentant l'adhésivité, en une quantité située entre 0,5 et 15 % en masse par rapport à la masse de l'ensemble de (a) plus (b), résine ayant une température de ramollissement par la méthode bille et anneau (RBSP) située dans l'intervalle allant de 90° à 150°C, et
(c) au moins un additif sélectionné choisi parmi (1) au moins 10 jusqu'à 50 % en masse de carbonate de calcium, d'oxyde d'aluminium, de dioxyde de silicium, de terre à diatomées, de talc, d'oxyde de zinc, de noir de carbone et de dioxyde de titane et (2) des additifs qui se dégradent ou se volatilisent aux températures normales, 315°C, de réalisation des revêtements par extrusion ou au-dessous.

**2.** Composition selon la revendication 1, dans laquelle ledit composant polyéthylénique a un indice de fusion situé dans l'intervalle allant de 20 à 80 dg par minute.

**3.** Composition selon la revendication 1, dans laquelle la résine hydrocarbonée augmentant l'adhésivité est présente dans l'intervalle allant de 1 à 10 % en masse et est choisie parmi les béta-pinènes polymérisés, les polymères hydrogénés d'hydrocarbures en $C_5$, les copolymères alpha-méthylstyrène-vinyltoluène ou les esters de pentaérythritol ou la colophane de tall oil.

**4.** Composition selon la revendication 3, dans laquelle ladite résine augmentant l'adhésivité est un bêta-pinène polymérisé.

**5.** Composition selon la revendication 1, dans laquelle l'additif de (1) est un additif hygroscopique ou hydrophile.

**6.** Composition selon la revendication 5, dans laquelle l'additif est choisi parmi les noirs de carbone et les dioxydes de titane.

**7.** Composition selon la revendication 5, dans laquelle l'additif hygroscopique ou hydrophile est présent dans la composition en une concentration en excès de 20 % en masse jusqu'à 50 % en masse.

**8.** Composition selon la revendication 1, dans laquelle l'additif de (2) est choisi parmi les colorants organiques, les antioxydants organiques, les antistatiques organiques, les agents glissants, les azurants optiques et les lubrifiants.

**9.** Composition selon la revendication 8, dans laquelle l'additif de (2) est présent en une concentration située entre 0,05 et 10 % en masse par rapport au total.

**10.** Procédé pour le revêtement par extrusion à basse température d'un support par un film de polyéthylène ayant une épaisseur d'au moins 0,0075 mm, ledit procédé comprenant :
(a) l'application de la composition de la revendication 1 sur au moins une surface dudit support par revêtement par extrusion à une température située entre 175°C et 290°C.

**11.** Procédé selon la revendication 10, dans lequel ledit support est choisi parmi les papiers, les papiers photographiques, les cartons, les fibres, les matériaux polymères et les feuilles métalliques.

17

12. Article produit par le procédé de la revendication 11.

13. Article manufacturé comprenant un support sur lequel adhère une composition à base de polyéthylène comprenant :

   (a) un composant polyéthylénique ayant un indice de fusion situé dans l'intervalle allant de 10 à 100 dg par minute à 190°C et ayant une large distribution de masses moléculaires correspondant à un indice de polydispersité d'au moins 7,
   (b) une résine hydrocarbonée augmentant l'adhésivité, en une quantité située entre 0,5 et 15 % en masse par rapport à la masse de l'ensemble de (a) plus (b), résine ayant une température de ramollissement par la méthode bille et anneau (RBSP) située dans l'intervalle allant de 90° à 150°C, et
   (c) au moins un additif sélectionné choisi parmi (1) au moins 10 jusqu'à 50 % en masse de carbonate de calcium, d'oxyde d'aluminium, de dioxyde de silicium, de terre à diatomées, de talc, d'oxyde de zinc, de noir de carbone et de dioxyde de titane et (2) des additifs qui se dégradent ou se volatilisent aux températures normales, 315°C, de réalisation des revêtements par extrusion ou au-dessous.

14. Article manufacturé selon la revendication 3, dans lequel ledit support est choisi parmi les papiers, les papiers photographiques, les cartons, les fibres, les matériaux polymères et les feuilles métalliques.

DSC

Fig. I

EP 0 609 220 B1

DSC

Fig. 2a

DSC

Fig. 2 b

**D S C**

Fig. 2c

DSC

Fig. 2d

Fig. 3

Polyethylene Thickness, mils

Minimum Level of Tackifier to Effects Adhesion at 360°F, %

EP 0 609 220 B1